# EUROPEAN PATENT APPLICATION

(11) **EP 2 148 277 A1**
(43) Date of publication of application: **27.01.2010**
(21) Application number: 08013075.0
(22) Date of filing: 21.07.2008
(51) Int. Cl.: G06F 11/14

(54) **Computer device, in particular a measurement probe, and method for recovery of an operating system of a computer device**

(71) Applicant: SwissQual License AG, 4528 Zuchwil (CH)
(72) Inventor: Juric, Pero, 4513 Langendorf (CH); Bobst, Hanspeter, 4702 Oensingen (CH)
(74) Representative: Fischer, Britta Ruth

(57) **Abstract**

The invention relates to a computer device (1), in particular a measurement probe (1), comprising a computer module (2), that has a non-volatile memory with a partition on which an operating system is installed, a control unit (3) for controlling the computer module (2), and a bootable memory unit (8) that is connected to the computer module (2) via switching means (11) wherein the switching means (11) are controllable by the control unit (3) and wherein on the memory unit (8) an image of the partition of the non-volatile memory of the computer module (2) is stored, on which the operating system is installed, and wherein the control unit (3) is configured such that the switching means (11) are closed by the control unit (3) if booting of the computer module (2) is faulty. The invention further relates to a method for recovery of an operating system of a such computer device (1), the method comprising the steps of detection of faulty booting of the computer module (2), shutdown of the computer module (2) by the control unit (3), closing of the switching means (11), and recovering the operating system of the computer module (2) by restoring the partition of the non-volatile memory of the computer module (2), on which the operating system is installed, from its image that is stored on the memory unit (8).

## Description

The invention relates to a computer device, in particular a measurement probe, according to the preamble of claim 1 and to a method for recovery of an operating system of a computer device according to the preamble of claim 6. By the expression "computer device" it is meant a programmable electronic device or a programmable electronic machine that can store, retrieve, and process data. By the expression "computer device" can also be understood any machine or component that can be attached to a computer such as disk drives, printers, mice, and modems.

In particular, the invention is directed to a computer device that is given by a measurement probe used for so called quality of service (QoS) measurements of a telecommunication network. Such measurement probes (MP) typically comprise a computer module such as a personal computer (e.g. a notebook) and can be used unattendedly, i.e. without the need for direct human operator assistance. The unattended measurement probe is then remotely controlled via an air interface such as a mobile network or WLAN (wireless local area network) or via a fixed line connection such as LAN (local area network), the first being employed for mobile monitoring, the latter being employed for static monitoring. Such a measurement probe is e.g. available on the market as the product "Diversity Unattended" by SwissQual.

For taking quality of service measurements the measurement probe is usually deployed in a measurement vehicle. As measurement vehicles public transportation such as taxis, busses, trains or vehicles of delivery services may be used for which a high mileage/a high number of miles travelled on various geographical routes is typical.

For remotely controlling, the condition of the measurement probe has to be such that it can be reached, repaired and managed/controlled remotely, in particular if a hardware error or a software error occurs. If the operating system (OS) running on the computer module of the measurement probe is damaged, its functionality is impaired or it cannot be booted properly, then usually the only option for recovery is to reinstall or restore, respectively, the operating system (also called operating system recovery or computer system recovery). Examples for operating systems are Windows 2000, Windows XP or Windows Vista. However, also other operating systems such as Linux, Windows Mobile, Windows Embedded, or even in-house developed operating systems may be used.

If an operating system cannot prevent that critical regions of the internal memory of the computer module of the measurement probe (or any other computer device) may be overwritten accidently by a user application program or intentionally by e.g. a virus program, then the functionality of the operating system might be impaired which can render the operating system unbootable. The critical regions of an internal memory are defined as those regions that are critical for the functionality of the operating system. The critical regions are typically those regions where e.g. the system files and the partition table of the hard disk, respectively, are stored such as the master boot record (MBR). Hence, vital parts of (and/or for) the operating system would be destroyed and the computer device can usually not be (re- )booted anymore, if the critical regions or parts thereof were overwritten.

Measurement probes for quality of service measurements of telecommunication networks are usually monitored and controlled by a remote central configuration centre (CCC). While monitoring a measurement probe, the central configuration centre is typically able to detect if the computer module of the measurement probe is not functioning properly anymore. The measurement probe comprises a control unit for controlling its computer module that can also monitor the computer module and, thus, detect faulty behaviour of the computer module. The control unit can be realized by a personal computer or any other programmable hardware device with a micro controller. The control unit can be connected to the computer module via a communication interface such as a serial interface and/or a LAN (local area network). For the detection of faulty functioning of the operating system installed on the computer module the computer module can be configured such that it gives periodic status feedback, i.e. periodically sends status messages, to the central configuration centre and/or the control unit. If no status messages are received by the central configuration centre and/or the control unit anymore, then the control unit reboots the computer module of the measurement probe automatically (either of its own accord or as instructed by the central configuration centre).

If after rebooting of the computer module the detected failure or error resides or if the (re-)booting is not or erroneously performed, then an error report is usually generated for evaluation by a user. Depending on the contents of the error report the user can then decide if the operating system should be restored. The user keeps track of operating system restoring. Directly after restoring he can perform the steps that might be required for bringing the computer device back into its originally configured state. However, the disadvantage thereby is that the user has to actively attend to computer module or operating system failures, respectively. In case of the computer device being a mobile measurement probe this user interaction will have an impact on the normal behaviour of the vehicle carrying the measuring probe, i.e. during the repair process (the user interaction) a taxi or a bus, that are used as vehicle for the measurement probe, has to interrupt its service for the duration of the repair process. The user, who is typically a technician, has to remove the measurement probe from the vehicle, has to repair it and has to reinstall it into the same vehicle. During the time required for this tasks, the vehicle cannot be used for its main purpose, i.e. public transportation.

It is an object of the invention to provide a computer device, in particular a measurement probe, that is designed such that the operating system installed on its computer module can be recovered automatically if booting from the hard disk of the computer module can not be performed properly. It is furthermore an object of the invention to provide a method for recovery of an operating system - and preferably the remaining part of a first partition of a hard disk - of such a computer device. The method should in particular bring the computer device, i.e. its computer module, into the state it was in before operating system failure or damaging occurred.

In order to implement these and still further objects of the invention, which will become more readily apparent as the description proceeds, a computer device is provided that comprises a computer module, that has a non-volatile memory (NVM) with a partition on which an operating system is installed (in the following also called operating system partition), a control unit for controlling the computer module and an additional bootable memory unit that is distinct from the non-volatile memory and that is connected to the computer module via switching means. By the non-volatile memory (also called non-volatile storage) it is meant a computer memory than can retain stored information even when not powered. Examples of such a non-volatile memory are read-only memory, flash memory, most types of magnetic computer storage devices (e.g. hard disks, floppy disk drives, and magnetic tapes) and optical drives. Preferably, the non-volatile memory of the computer module of the computer device according to the invention is a hard disk.

The switching means can vary between an open state and a closed state and are controllable by the control unit, wherein in the open state the connection between the memory unit and the computer module is broken/interrupted and in the closed state the connection between the memory unit and the computer module is closed/established. By means of the switch manual connection and removal of the bootable memory device are emulated. On the bootable memory unit there is stored an image of the operating system partition of the non-volatile memory (e.g. hard disk) and the control unit is configured such that the switching means are closed by the control unit if booting of the computer module from its non-volatile memory (e.g. hard disk) is faulty. That is, if booting from the non-volatile memory of the computer module is deemed to be faulty such than reinstalling of the operating system is considered to be necessary, then the switching means are set by the control unit into the closed state and the memory unit functions as boot device for the computer module. The computer device is preferably in the form of a measurement probe. If exemplarily an USB stick is used as bootable memory unit then the switch can be built in the power line from the computer module to the memory unit.

Furthermore, a method for recovery of an operating system of a computer device according to the invention is provided. The method comprises the following steps: detection of faulty booting of the computer module from its non-volatile memory (e.g. hard disk), shutting down of the computer module by the control unit, setting the switching means into the closed state by the control unit and recovering the operating system, that was installed on the operating system partition of the non-volatile memory of the computer module, by restoring the operating system partition from its image that is stored on the memory unit.

As memory unit, for example, an USB stick (universal serial bus stick), an optical disk drive, a floppy disk drive, a SCSI (Small Computer System Interface) drive, a ZIP drive, a CD-ROM, a LAN (local area network), or an external hard disk drive (HDD) may be used, that has a large enough memory capacity for storing an image of the operating system. Preferentially, an USB stick is used as it is of small size, i.e. does not need much installation space, and is easy to carry and attach. It can also be easily integrated into a housing of the measurement probe.

For recovery there is preferably also a copy of the partition table of the non-volatile memory (e.g. hard disk) of the computer module stored on the memory unit, i.e. a copy of the master boot record (MBR), so that the master boot record can also be recovered from the memory unit.

The operating system partition typically corresponds to the first partition of a non-volatile memory, in particular the hard disk, which is usually called drive C. Log and measurement files are typically stored on a subsequent partition, in particular the second partition of the non-volatile memory, in particular the hard disk, which is usually called drive D. Preferably only the operating system partition (and preferentially in addition the partition table) of the non-volatile memory of the computer module are recovered by the method of the invention such that log and measurement files on drive D are not overwritten and thereby deleted.

For automatic recovery of the operating system the BIOS (Basic Input-Output System) settings of the computer module are changed in that the boot order of the computer module is preferably such that the computer module first tries to boot from the memory unit. That is the memory unit has the highest order with respect to booting. BIOS refers to the firmware code which is run by a computer module such as a personal computer when it is powered on. In case of the switching means being open, the connection to the memory unit is open and the boot attempt from the memory unit fails. The computer module will then try to boot from the second boot device which is its own non-volatile memory (e.g. hard disk). In case of the switching means being closed, the connection to the memory unit is established and the boot attempt from the memory unit succeeds.

For automatic start of the recovery procedure and start and execution of the booting the memory unit preferentially has a so called "autoexec.bat"-file stored thereon (for MS-DOS-based operating systems) or a corresponding file in case of another operating system such as Linux. The name of the file "autoexec.bat" stands for automatic execution and describes its function, namely automatically executing commands during system startup.

Furthermore, there is preferably stored a backup and restoring software on the memory unit for restoring the operating system partition by copying the image, that is stored on the memory unit, onto the computer module, i.e. its operating system partition. The backup and restoring software is preferentially designed such that it can create on the memory unit an image (i.e. an image file) of the operating system partition of the non-volatile memory (e.g. hard disk) of the computer module, for example when the computer device is initially configured and/or periodically during use. An example of such a backup and restoring software is the program "Drive Snapshoot" for MS-DOS and Windows operating systems. For Linux operating systems corresponding scripts or software may be employed. For taking an image the backup and restoring software takes a snapshot of a non-volatile memory (e.g. hard disk). The term "image" implies as the software typically copies the state of the non-volatile memory (e.g. hard disk) sector by sector to the image.

According to a preferred embodiment of the invention faulty booting is detected (i.e. booting is deemed to be faulty) when a predefined number of boot attempts from the non-volatile memory (e.g. hard disk) of the computer module have failed. First after this predefined number of boot attempts have failed, the switching means is closed by the control unit, so that the booting takes place from the memory unit.

With the computer device and the method for operating system recovery according to the invention the operating system of the computer module of the computer device can be automatically recovered without the need for human intervention. System recovery can also be used to clone a non-volatile memory (e.g. hard disk) to another non-volatile memory (e.g. hard disk), for example to swap a used hard disk for another, upgraded hard disk.

Further advantageous features and applications of the invention can be found in the dependent claims as well as in the following description of the drawings illustrating the invention. In the drawings like reference signs designate the same or similar parts throughout the several figures of which:
Fig. 1 shows a schematic drawing of an embodiment of a computer device in form of a measurement probe according to the invention and
Fig. 2 shows a flowchart of the method according to the invention.

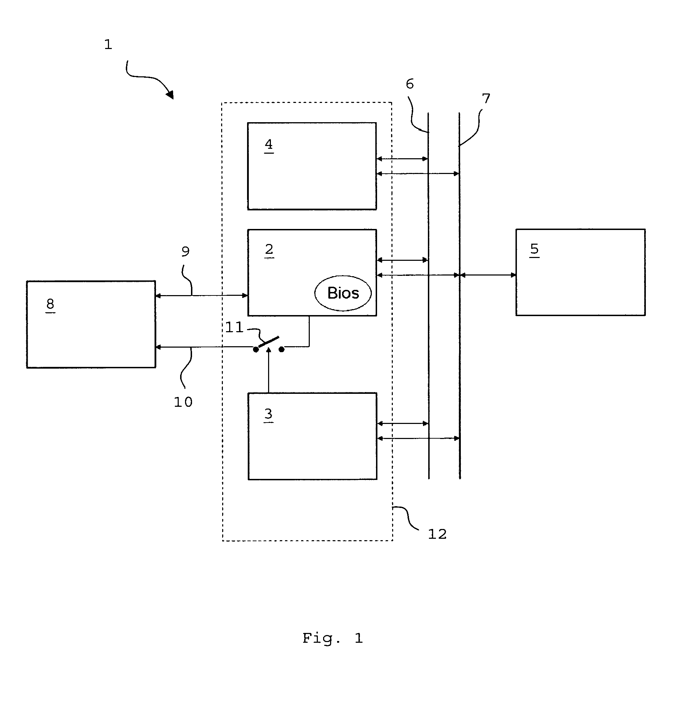

Fig. 1 shows a computer device in form of a measurement probe 1 that comprises a computer module 2 with a BIOS and a non-volatile memory in form of a hard disk with a first partition and a second partition, wherein on the first partition the operating system is stored (operating system partition) and on the second partition log and measurement files are stored. The measurement probe 1 is particularly used for quality of service measurements and monitoring of a telecommunication network. The measurement probe 1 can be used for static or mobile monitoring of a telecommunication network. The computer module 2 can e.g. be a personal computer with Windows XP installed thereon as operating system.

The measurement probe 1 furthermore comprises a control unit 3 for controlling the computer module 2. As control unit 3 a micro controller or a computer comprising a micro controller (such as a personal computer) may be used. The measurement probe 1 further comprises a communication module 4 that is connected to an internal communication interface 6, which is e.g. a serial interface, and an external communication interface 7, which is e.g. a local area network (LAN). The communication interfaces 6, 7 are both computer communication interfaces. As internal communication interface 6 of course also a LAN could be used. The communication module can communicate with the remote central configuration centre 5 via the external communication interface 7. The configuration centre 5 has via the external communication interface 7 also access to and can exchange data/messages with the computer module 2 and/or the control unit 3. The computer module 2, the control unit 3 and the communication module 4 can communicate and exchange data/messages via the internal communication interface 6.

The aim of the central configuration centre 5 is in particular to monitor the performance of the measurement probe 1 or measurement probes (if several measurement probes 1 are used for taking quality of service measurements) and to assign and schedule tasks to the measurement probe(s) 1.

The measurement probe 1 comprises a bootable memory unit 8 on which an image of the operating system partition is stored. The memory unit 8 is connected to the computer module 2 via a data interface 9 for transferring the image to the computer module 2 (i.e. its operating system partition) and for imaging the first partition of the computer module 2 and via one or more memory unit activation lines 10, which are in particular given by a wired connection, preferably a power line for energy supply of the memory unit 8 particularly in the case of the memory unit 8 being an USB stick. The memory unit activation line 10 comprises switching means in form of a switch 11 that is controlled by the control unit 3, i.e. the control unit 3 can open and close the switch 11 thereby interrupting/breaking the memory unit activation line 10 from the computer module 2 to the memory unit 8. By switching/alternating the state of the memory unit activation line 10 attachment and detachment, respectively, of the memory unit 8 are emulated. The memory unit 8 is for example given by an USB stick. The memory unit 8 is preferably permanently connected to the computer module 2 (with the switch 11 being in an open or closed state as case may be) but it is only supplied with electrical energy when the switch 11 of the memory unit activation line 10, which is preferably given by a power line, is in a closed state for performing an operating system recovery or for imaging the operating system partition of the computer module. Of course, the memory unit activation line 10 can also be given other lines such as one or more control lines instead or additionally to the power line if appropriate with respect to the particular memory unit employed.

The computer module 2, the control unit 3 and the communication module 4 are preferably integrated in a housing 12 to which the memory unit 8 is externally attached in order to make exchange of the memory unit 8, for example in the case of the memory unit 8 being an USB stick, easier. Of course, the memory unit 8 can also be integrated into the housing 12. The computer module 2, the control unit 3 and the communication module 3 can also have separate housings.

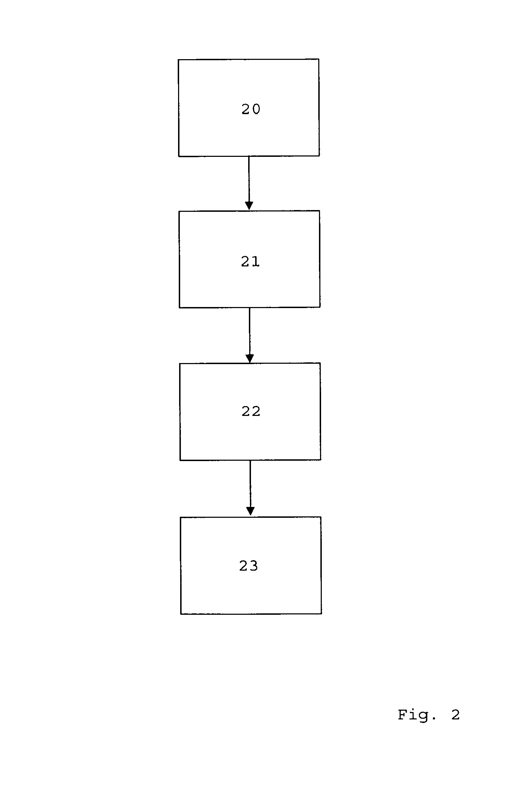

Figure 2 shows a flowchart representing the method according to the invention. If the measurement probe 1 and possible applications installed thereon are not functioning properly, then the central configuration centre 5, that monitors the measurement probe 1, detects the erroneous functioning and if applicable instruct the control unit 3 to reboot the computer module 2 with the switch 11 being open/in detached position such that the computer module 2 tries to reboot from its own hard disk. In case of the control unit 3 being designed for monitoring of the computer module 2 the erroneous functioning can also be detected by the control unit 3 itself that then of its own accord can reboot the computer module 2. The improper/erroneous functioning is, for example, detected if a feedback or a periodic message that the computer module 2 is supposed to send to the central configuration centre 5 and/or the control unit 3 is not received by either device.

If, however, the operating system partition of the computer module 2 is damaged or its functioning is impaired, respectively, rebooting from its own hard disk might not resolve the problem and might not make the measurement probe 1 running again. In such a case, after a predefined number of boot attempts from the hard disk of the computer module 2 have been initiated by the control unit 3 and performed without success, a faulty booting is detected in step 20 of the method of the invention by the central configuration centre 5 and/or the control unit 3. The predefined number of boot attempts from the hard disk of the computer module 2 can be stored in the control unit 3.

When faulty booting from the hard disk has been detected in step 20, the computer module 2 is shut down by the control unit 3 in step 21, either of its own accord or as instructed by the central configuration centre 5. In step 22 of the method of the invention the switch 11 is then closed/brought into an activated (attached) state by the control unit 3, thereby establishing the connection between the memory unit 8 and the computer module 2. As according to the BIOS settings of the computer module 2 the memory unit 8 is the first device from which booting shall be performed and the switch 11 is closed, the memory unit 8 acts now as booting device and boots the computer module 2. Furthermore, recovery of the operating system of the computer module 2 is performed in step 23 of the method of the invention by restoring the operating system partition on the hard disk of the computer module 2 from its image on the memory unit 8. That is, the operating system is recovered by copying the image of the operating system from the memory unit 8 onto the first partition of the computer module hard disk. For this the memory unit 8 comprises appropriate backup and restoring software such as e.g. "Drive Snapshot". Hence, initiated by the control unit 3 an automatic recovery of the first partition is done from the memory unit 8.

The communication module 4, which may for example be a virtual private network (VPN) device, is preferably designed such that it can communicate with the control unit 3 so that it can inform the user about the current status and possible errors. The communication between the communication module 4 and the control unit 3 can take place e.g. via the internal communication interface 6 by means of the programming language Python.

In case booting and recovery from the memory unit 8 could not be performed because of the occurrence of an error (about which the computer module 2 informs the control unit 3 by a corresponding feedback message) or a timeout, the control unit 3 preferably stores the status information about the failure of the booting and recovery from the memory unit 8. The communication module 4 can detect this status information via the serial interface 6 and communicates it to the user. Then the user can perform a manual recovery. The control unit 3 either waits for such a manual recovery or retries automatic recovery from the memory unit 8 for a predefined number of times, this predefined number being stored on the control unit 3.

The central configuration centre 4 can be designed such that the user can remotely send via the central configuration centre 4 a so called recovery command to the control unit to start the method of the invention.

It is to be understood that while certain embodiments of the present invention have been illustrated and described herein, it is not to be limited to the specific embodiments described and shown.

## Claims

1. A computer device, in particular a measurement probe (1), comprising a computer module (2) and a control unit (3) for controlling the computer module (2), the computer module (2) having a non-volatile memory with a partition on which an operating system is installed, **characterised in that** a bootable memory unit (8) is provided that is connected to the computer module (2) via switching means (11) wherein the switching means (11) are controllable by the control unit (3) and wherein on the memory unit (8) an image of that partition of the non-volatile memory of the computer module (2) is stored, on which the operating system is installed, and wherein the control unit (3) is configured such that the switching means (11) are closed by the control unit (3) if booting of the computer module (2) is faulty.

2. The computer device of claim 1, wherein the boot order of the computer module (2) is configured such the computer module (2) first tries to boot from the bootable memory unit (8).

3. The computer device of claim 1 or 2, wherein the memory unit (8) has a copy of the partition table of the non-volatile memory of the computer module (2) stored thereon.

4. The computer device of any of the preceding claims, wherein the memory unit (8) comprises a backup and restoring software for restoring the partition of the disk drive of the computer module (2) on which the operating system is installed.

5. The computer device of any of the preceding claims, wherein a communication module (4) is provided for communicating with a central configuration centre (5) that is configured to communicate with the control unit (3).

6. A method for recovery of an operating system of a computer device (1) according to any of the preceding claims, comprising the following steps:
- detection of faulty booting of the computer module (2),
- shutdown of the computer module (2) by the control unit (3),
- closing of the switching means (11) and
- recovering the operating system of the computer module (2) by restoring the partition of the non-volatile memory of the computer module (2), on which the operating system is installed, from its image that is stored on the memory unit (8).

7. The method of claim 6, wherein faulty booting is detected when a predefined number of boot attempts from a non-volatile memory of the computer module have failed.

8. The method of claim 7, wherein the number of boot attempts is monitored by the control unit (3) and/or a central configuration centre (5).
